# FASCICULE DE BREVET EUROPEEN

(11) **EP 0 964 337 B1**
(45) Date de publication et mention de la délivrance du brevet: **12.01.2011**
(21) Numéro de dépôt: 99401441.3
(22) Date de dépôt: 11.06.1999
(51) Int. Cl.: G06F 13/40

(54) **Structure d'interconnexion pour l'échange de données entre les divers organes adressables d'un microcalculateur**
Verbindungsstruktur zum Datenaustausch zwischen verschiedenen adressierbaren Geräten eines Mikrorechners
Interconnection structure to exchange data between the various addressable devices of a microcomputer

(30) Priorité: 12.06.1998 FR 9807431
(43) Date de publication de la demande: 15.12.1999
(73) Titulaire: ELA MEDICAL (Société anonyme), 92541 Montrouge (FR)
(72) Inventeur: Lecoutre, Christophe, 78210 Saint cyr L'Ecole (FR); Izaute, Isabelle, 75014 Paris (FR); Swift, J. Stephen, San Diego, Californie 92128-1075 (US)
(74) Mandataire: Dupuis-Latour, Dominique

(56) Documents cités:
- EP-A- 0 691 767
- WO-A-90/16026
- US-A- 4 999 832

## Description

La présente invention concerne les structures d'interconnexion pour l'échange de données entre les divers organes adressables d'un microcalculateur, notamment le microcalculateur d'un dispositif médical implantable actif tel qu'un stimulateur ou défibrillateur cardiaque.

Dans ces applications particulières, la consommation du microcalculateur est un facteur qui doit être soigneusement maîtrisé, car elle a une incidence directe sur la durée de vie de l'implant, c'est-à-dire le nombre d'années au bout duquel une intervention sera nécessaire pour échanger l'implant, arrivé en fin de vie.

À cet égard, l'utilisation de structures à microcalculateur de plus en plus complexes a conduit à la multiplication sur le microcircuit des mémoires vives (RAMs), mémoires mortes (ROMs), registres divers, canaux d'accès direct mémoire (DMA), éléments de gestion des interruptions, etc. (désignés par la suite sous le vocable générique d"'organes adressables" du microcalculateur).

Ces divers organes sont interconnectés entre eux pour permettre l'échange de données au moyen d'une structure comprenant une artère commune d'interconnexion assurant le transfert parallèle, sur un groupe de conducteurs, des informations à échanger.

Dans le domaine des réseaux locaux (LANs), de très nombreuses topologies ont été proposées pour interconnecter entre eux des postes informatiques. Le EP 0 691 767 A2 décrit ainsi une architecture de type "token ring" permettant d'interconnecter des ordinateurs et leurs périphériques, avec une bande passante élargie et une gestion optimisée des risques de collision entre trames de données concurrentes circulant sur le réseau.

Dans le cas des dispositifs à microcalculateur - et tout particulièrement celui des dispositifs médicaux implantables actifs tels que les stimulateurs ou défibrillateurs cardiaques la structure typique de l'artère d'interconnexion est celle du bus bidirectionnel sur lequel sont reliés tous les organes du microcalculateur. L'échange de données peut avoir lieu dans un sens, par exemple de l'unité centrale vers une mémoire pour une instruction d'écriture, ou dans le sens inverse, par exemple d'une mémoire vers l'unité centrale pour une instruction de lecture.

Avec la multiplication du nombre d'organes adressables connectés à un tel bus de données bidirectionnel apparaissent un certain nombre de difficultés qui ont une incidence sérieuse sur la consommation, facteur critique dans le domaine des dispositifs médicaux implantés comme on l'a exposé plus haut.

Tout d'abord, un bus bidirectionnel relié à des nombreux organes implique, du point de vue électrique, une capacité importante par rapport à la masse. Cette capacité parasite va d'une part augmenter le temps nécessaire pour modifier l'état logique de l'artère commune, en raison du temps nécessaire à la charge de celle-ci par les conducteurs de bus, conduisant donc à des cycles de bus de plus en plus longs. D'autre part et surtout, la charge et la décharge de cette capacité à chaque changement d'état logique va augmenter sensiblement la consommation énergétique du circuit.

Diverses solutions ont été proposées pour remédier à cet inconvénient, par exemple en augmentant la taille des conducteurs de bus pour pouvoir charger et décharger plus rapidement la capacité parasite. Mais l'augmentation de la taille des conducteurs de bus induit une capacité encore plus grande, et se fait en outre au détriment de la surface du circuit, conséquence particulièrement fâcheuse dans le cas des dispositifs médicaux implantables, dont la miniaturisation doit être particulièrement étudiée.

Un autre inconvénient est que chaque organe reçoit des signaux de transition du bus bidirectionnel, ce qui implique une consommation inutile. Une solution possible consiste à partager le bus bidirectionnel en une multitude de sous-bus bidirectionnels. Cette solution est pénalisante d'un point de vue du routage, c'est-à-dire au détriment de la surface utilisée. Pour rester compatibles avec les temps de cycles imposés, les commandes des conducteurs de bus sont activées avec une certaine période de chevauchement, ce qui correspond à des courts-circuits et se fait au prix d'une augmentation transitoire de la consommation énergétique du circuit.

D'autre part, les conducteurs des bus bidirectionnels connaissent trois états, à savoir '1','0' et un état à haute impédance, ce dernier correspondant à une absence de circulation de données sur le bus, c'est-à-dire un état non piloté de ce dernier. Dans les microcalculateurs à faible consommation, notamment ceux qui inhibent le fonctionnement de l'horloge système pour économiser l'énergie, il est essentiel que le circuit ne cesse pas de fonctionner au moment où un segment de bus se trouve dans un état à haute impédance, car des entrées flottantes sur des circuits CMOS conduiraient à des courants élevés allant à l'encontre de la recherche de l'économie de courant. Pour empêcher ceci, on peut placer sur le bus des circuits de verrouillage ou des circuits répéteurs, qui maintiennent l'état du bus en l'absence de pilotage autre. Ces circuits permettent d'éviter toute entrée flottante, mais consomment de l'énergie pour leur mise à jour, à chaque transaction intervenant sur le bus.

L'un des buts de l'invention est de remédier à ces divers inconvénients, en proposant une structure d'interconnexion évitant le recours à un bus bidirectionnel, cette dernière structure étant, comme on l'a indiqué, mal adaptée à des circuits à la fois complexes, miniaturisés et à faible consommation.

L'abandon de l'architecture bidirectionnelle et de l'état à haute impédance permettra, comme on l'expliquera plus bas, de réduire très fortement la capacité parasite dont on a exposé les inconvénients et de faire disparaître les problèmes liés à la présence de transitions d'un sens à l'autre sur le bus.

Parmi les avantages procurés par l'invention, on peut ainsi citer :
- moindre consommation pour une même topologie de circuit (c'est-à-dire pour un même nombre d'organes adressables différents interconnectés entre eux) ;
- possibilité de réduire le temps de cycle, pour augmenter la rapidité du calculateur ;
- topologie de circuit adaptée, donc gain de surface et miniaturisation accrue de circuit.

À cet effet, la structure d'interconnexion de l'invention comprend une artère d'interconnexion assurant le transfert parallèle sur un groupe de conducteurs des informations à échanger, configurée en au moins un anneau sur lequel les informations circulent en boucle fermée et de façon unidirectionnelle, cette artère comportant une pluralité de points de couplage aux organes du microcalculateur.

Dans un mode de mise en oeuvre particulier, au moins certains des points de couplage comprennent une passerelle vers, et depuis, un autre anneau d'ordre inférieur, anneau sur lequel les informations circulent également en boucle fermée et de façon unidirectionnelle, de manière à constituer une structure comportant une pluralité d'anneaux hiérarchisés entre eux.

Dans ce dernier cas, il est notamment prévu sur l'anneau d'ordre le plus élevé un point de couplage à une unité centrale de traitement.

Par ailleurs, la passerelle comprend avantageusement des moyens multiplexeurs pour transférer sélectivement en aval sur l'anneau d'ordre supérieur soit l'information reçue de l'anneau d'ordre inférieur, si le point de couplage correspondant à l'organe adressé se trouve sur cet anneau d'ordre inférieur ou sur un anneau d'ordre encore inférieur couplé à ce dernier, soit l'information reçue de l'anneau d'ordre supérieur en amont, dans le cas contraire.

Avantageusement, au moins certains des points de couplage comprennent un registre associé à l'organe correspondant du microcalculateur, notamment avec des moyens multiplexeurs pour transférer sélectivement en aval sur l'anneau soit le contenu du registre, si le point de couplage correspond à l'organe adressé, soit l'information reçue de l'anneau en amont, dans le cas contraire.

L'un des points de couplage peut être un point de couplage à un bus d'échange de données bidirectionnel, ce point de couplage étant alors de préférence situé sur l'anneau d'ordre le plus élevé et précédant immédiatement l'unité centrale de traitement sur cet anneau.

De préférence, les conducteurs de l'artère d'interconnexion opèrent en logique à deux niveaux, essentiellement sans état à haute impédance.

De préférence également, le circuit du microcalculateur présente une topologie d'implantation dans laquelle les organes appartenant à un même anneau sont regroupés sur un domaine commun, ce domaine étant adjacent au domaine correspondant à l'anneau de même rang immédiatement suivant, ou précédent, dans le sens de circulation de l'information.

D'autres caractéristiques et avantages de l'invention apparaîtront à la lecture de la description ci-dessous d'un exemple de réalisation, faite en référence aux dessins annexés.
La figure 1 illustre de façon schématique un anneau élémentaire de la structure d'interconnexion selon l'invention.
La figure 2 montre une structure selon l'invention, comportant une pluralité d'anneaux associés en une structure hiérarchisée.
La figure 3 montre la manière dont peut être insérée sur la boucle de la figure 1 une passerelle de couplage avec un anneau d'ordre supérieur.
La figure 4 illustre une topologie préférentielle d'implantation des divers circuits d'une structure telle que celle de la figure 2.

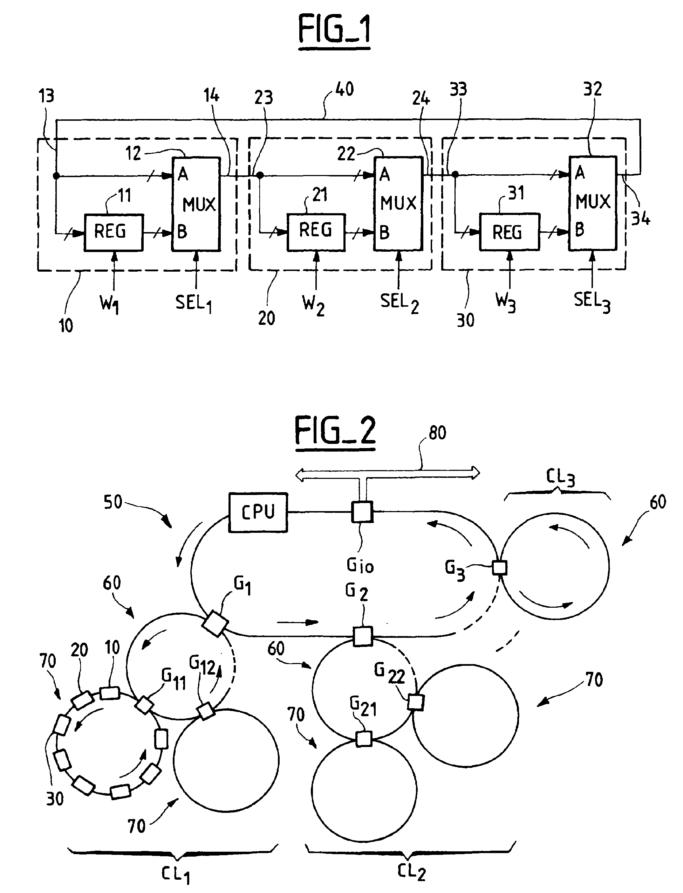

On va tout d'abord décrire en référence à la figure 1 une configuration élémentaire d'anneau qui, associée à d'autres configurations semblables, permettra d'obtenir la structure d'interconnexion de l'invention.

Cette configuration élémentaire comporte une pluralité d'étages 10, 20, 30 (ici au nombre de trois, ce nombre n'étant bien entendu aucunement limitatif et un anneau pouvant inclure un nombre bien supérieur d'étages).

Chaque étage 10, 20, 30 comporte un registre 11, 21, 31 et un multiplexeur 12, 22, 32 à deux entrées A, B et une sortie.

Les diverses entrées et sorties des registres et multiplexeurs sont toutes constituées d'un groupe de conducteurs sur lesquels sont transférées en parallèle les informations, par exemple des groupes de huit conducteurs (informations vectorisée sur huit bits), représentés par une simple ligne sur les dessins.

Chaque registre 11, 21, 31 peut désigner un organe adressable d'un microcalculateur tel qu'une RAM, une ROM, une interface d'accès DMA, des registres de gestion des interruptions, de temporisation, etc.

Chaque registre possède un port d'entrée et un port de sortie distincts, chacun des ports étant unidirectionnel (entrée ou bien sortie) et fonctionne en logique à deux états, c'est-à-dire n'est pas susceptible de prendre un état indéfini à haute impédance.

L'entrée 13, 23, 33 de chaque étage 10, 20, 30 est appliquée simultanément d'une part au port d'entrée du registre 11, 21, 31 respectif et d'autre part à l'un, A, des ports d'entrée du multiplexeur respectif 12, 22, 32. L'autre entrée, B, du multiplexeur est reliée au port de sortie du registre associé.

Une logique de commande, non illustrée, active les signaux d'écriture W₁, W₂, W₃ des registres 11, 21, 31 et de sélection SEL₁, SEL₂, SEL₃ des multiplexeurs 12, 22, 32.

La sortie 14 de l'étage 10 (port de sortie du multiplexeur 12) est appliquée à l'entrée 23 de l'étage 20, la sortie 24 de l'étage 20 (port de sortie du multiplexeur 22) est appliquée à l'entrée 33 de l'étage 30 et la sortie 34 de l'étage 30 (port de sortie du multiplexeur 32) est retournée à l'entrée 13 de l'étage 10 par une ligne 40, de manière à constituer un anneau fermé sur lequel les données pourront circuler de manière unidirectionnelle (c'est-à-dire de l'étage 10 vers l'étage 20, puis de l'étage 20 vers l'étage 30, puis de l'étage 30 vers l'étage 10, et ainsi de suite, mais jamais dans le sens contraire).

Lorsqu'un organe du microcalculateur n'est pas adressé, le signal de sélection SEL correspondant du multiplexeur n'est pas activé et le multiplexeur transfère simplement (sélection du port A) le contenu appliqué en entrée de l'étage à la sortie de ce même étage, puis à l'entrée de l'étage suivant.

Si aucun signal de sélection n'est activé parmi les différents étages de l'anneau, la valeur de la donnée appliquée en entrée du premier étage sera conservée tout au long de l'anneau, la boucle fermée de multiplexeurs jouant un rôle de verrou.

Avec une telle boucle, il existe une probabilité faible, mais non nulle, de phénomènes d'oscillation. En effet, chaque multiplexeur présentant un retard non nul pour la transmission de l'entrée à la sortie, il pourrait y avoir propagation d'une perturbation transitoire sur la boucle, avec risque d'apparition d'un courant élevé associé à l'oscillation. Pour pallier ce risque, la logique de commande est conçue pour maintenir l'état des signaux de sélection SEL utilisés lors du dernier cycle auquel l'anneau a été adressé et, lorsqu'aucun registre de l'anneau n'a été adressé, le dernier signal de sélection SEL est maintenu activé (principe "du dernier accédé").

Lorsqu'en revanche l'organe adressable du microcalculateur correspondant à l'un des étages est adressé, pour un cycle de lecture ou d'écriture, le signal de sélection SEL correspondant du multiplexeur est activé (sélection du port B), de sorte que le multiplexeur transfère le contenu du registre vers la sortie de l'étage considéré, qui est ainsi appliqué à l'étage suivant. S'il s'agit d'un cycle d'écriture, le signal d'écriture W est également activé, indiquant au registre adressé qu'il y a lieu de verrouiller les données appliquées en entrée de l'étage. Lorsqu'un registre est adressé (sélection d'un étage), il produit donc une donnée qui sera introduite dans l'anneau et se propagera le long de celui-ci et en retour jusqu'au port d'entrée de l'étage sélectionné.

On peut déjà remarquer que, dans cette structure élémentaire, on s'affranchit déjà de deux des inconvénients des bus bidirectionnels mentionnés plus haut :
- on supprime les états à haute impédance, et donc la possibilité de signaux d'entrée flottants en fonction du séquencement, et
- les signaux sont tous unidirectionnels et pilotés, et il n'existe aucune possibilité, à aucun moment, d'avoir des conducteurs de bus agissant en sens opposé avec élévation du courant et consommation importante d'énergie.

À partir de la configuration élémentaire d'anneau que l'on vient d'exposer, l'invention propose d'associer entre eux, par un couplage approprié, une pluralité d'anneaux de manière à constituer une structure hiérarchique.

La figure 2 illustre une telle structure hiérarchique.

Le niveau le plus élevé est un anneau fermé unidirectionnel 50, que l'on appellera "anneau racine" auquel est couplée l'unité centrale de traitement CPU.

Sur cet anneau racine 50 sont couplés par l'intermédiaire de passerelles ou *gateways* G₁, G₂ ... G_{N} une pluralités d'anneaux ou de groupes d'anneaux organisés en grappe ou *clusters* CL₁, CL₂ ... CL_{N}.

Une grappe peut être constituée d'un unique anneau 60 isolé, comme illustré pour la grappe CL_{N}, la hiérarchie ne comportant alors pour cette grappe que deux niveaux (anneau racine 50 et anneau d'extrémité 60).

Une grappe peut également être constituée, comme illustré pour les grappes CL₁ et CL₂, d'un anneau 60 comportant lui aussi des passerelles telles que G₁₁, G₁₂ ou G₂₁, G₂₂ vers des anneaux 70 de niveau encore inférieur, la hiérarchie comportant alors pour ces grappes trois niveaux dans cet exemple (anneaux 50, 60 et 70).

Les étages 10, 20, 30 ... associés à chacun des organes adressables du microcalculateur sont situés sur les anneaux de plus bas niveau, les anneaux de niveau intermédiaire étant de préférence (mais non nécessairement) uniquement des anneaux de transition ne comportant que des passerelles vers le niveau supérieur et les niveaux inférieurs.

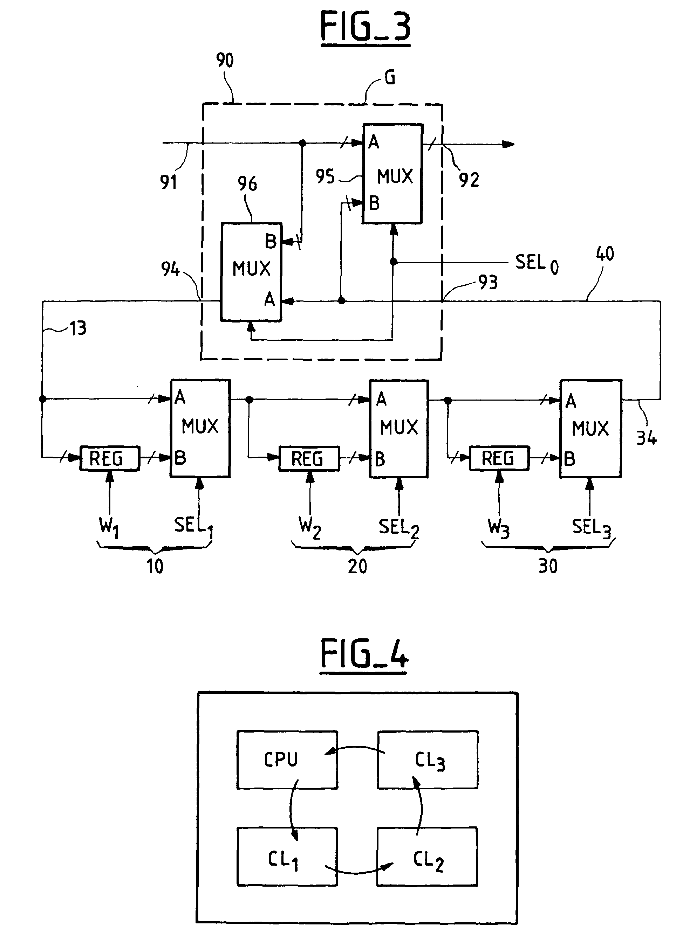

La figure 3 illustre la structure d'une passerelle G permettant le transfert de données entre deux niveaux de la hiérarchie.

La structure de base de l'anneau est essentiellement la même que celle de la figure 1, avec une pluralité d'étages 10, 20, 30 associés chacun à un organe adressable du microcalculateur, à la différence près que l'on intercale la passerelle G sur le conducteur de retour 40 reliant la sortie 34 du dernier étage de l'anneau à l'entrée 13 du premier étage de ce même anneau.

La passerelle G est constituée d'un étage 90 comportant une entrée 91 en provenance de l'anneau d'ordre supérieur, une sortie 92 à destination de ce même anneau d'ordre supérieur, une entrée 93 en provenance de l'anneau d'ordre inférieur (reliée à la sortie 34 de l'étage 30) et une sortie 94 à destination de ce même anneau d'ordre inférieur (reliée à l'entrée 13 du premier étage 10).

Le circuit comporte deux multiplexeurs 95, 96 à deux entrées A et B, commandés par un signal de sélection unique commun SEL₀. Le signal d'entrée 91 est appliqué à l'entrée A du multiplexeur 95 et à l'entrée B du multiplexeur 96, et l'entrée 93 est appliquée à l'entrée B du multiplexeur 95 et à l'entrée A du multiplexeur 96. La sortie 92 est reliée à la sortie du multiplexeur 95, et la sortie 94 à la sortie du multiplexeur 96.

Avec une telle configuration, si le signal de sélection SEL₀ n'est pas activé, les deux multiplexeurs transféreront sur leurs sorties respectives le signal présent sur leurs entrées A, de sorte que les signaux circuleront sans changement séparément sur chacun des deux anneaux.

En revanche, si le signal SEL₀ est activé, l'entrée 91 sera reliée à la sortie 94 et l'entrée 93 à la sortie 92, de sorte que le signal amont provenant de l'anneau d'ordre supérieur sera transféré sur l'anneau d'ordre inférieur en entrée du premier étage 10, et le signal recueilli en sortie du dernier étage 30 de l'anneau d'ordre inférieur sera appliqué en aval sur l'anneau d'ordre supérieur. Le signal de sélection SEL₀ est activé chaque fois que l'un quelconque des étages de l'anneau d'ordre inférieur est adressé, c'est-à-dire, dans l'exemple illustré, chaque fois que l'un des signaux SEL₁, SEL₂ ou SEL₃ est activé.

Pour obtenir une structure hiérarchique à plus de deux niveaux, on peut remplacer un ou plusieurs des étages tels que 10, 20, 30 par une autre passerelle G, qui contrôlera le transfert des informations vers l'anneau ou les anneaux d'ordre inférieur, le signal de sélection de la passerelle étant activé chaque fois qu'un registre de l'anneau de niveau inférieur, ou de l'une des anneaux d'un niveau encore inférieur, dépendant de cette passerelle est activé.

Il est ainsi possible, à partir de l'unité centrale CPU située sur l'anneau racine 50, d'accéder à l'un quelconque des registres correspondant à un organe adressable, par activation appropriée des signaux de sélection des différents passerelles menant aux registres associés à cet organe adressé.

La logique de commande des différentes passerelles peut être conçue de manière que seuls les segments (anneaux) du trajet de données nécessaires pour véhiculer une donnée d'un registre source d'un anneau vers un registre destination d'un autre anneau aient effectivement besoin de changer d'état. Dans ce cas, tous les autres segments de données situés ailleurs dans la hiérarchie de grappe sont entièrement statiques et ne consomment aucune énergie de transition.

On peut grouper sur une même puce un nombre important d'organes. Par exemple, une puce typique de stimulateur cardiaque programmable DDD comporte de l'ordre de 160 registres différents à accéder (DMA, registres de temporisation, registres de gestion des interruptions, etc.) 31 RAMs et 12 ROMs différentes.

Le nombre d'organes par anneau est choisi de manière à réaliser un compromis entre, d'une part, l'économie d'alimentation recherchée (en multipliant le nombre d'anneaux on augmente la sélectivité résultant de la structure hiérarchique, et donc ses performances) et la complexité de réalisation du système. En pratique, on peut situer l'optimum à environ 6 à 10, typiquement 8, organes adressables par anneau.

Par ailleurs, cette structure hiérarchisée en grappe permet l'ajout de nouveaux organes adressables dans la hiérarchie sans modification substantielle de la consommation globale du circuit ni du temps d'accès aux organes déjà présents.

En ce qui concerne l'anneau racine 50, sa structure est adaptée à sa position particulière. Il contient l'unité centrale CPU du microcalculateur et les passerelles G₁, G₂, G_{N} vers toutes les grappes du système. Par ailleurs, pour assurer les échanges avec le monde extérieur, il est prévu une passerelle particulière G_{IO} assurant l'interfaçage entre l'anneau racine 50 et un bus bidirectionnel 80 de type classique nécessaire à l'interfaçage avec d'autres puces, par exemple des mémoires standard et des circuits de gestion des périphériques. En ce qui concerne les signaux de sélection des passerelles G₁, G₂, G_{N}, G_{IO} de l'anneau racine 50, ceux-ci doivent être commandés séparément afin de permettre aux données de se propager sur l'anneau racine à la fois pour les opérations d'écriture et de lecture de l'unité centrale, et c'est notamment pour cette raison que la passerelle G_{IO} est positionnée juste avant l'unité centrale CPU, dans le sens de propagation de données.

En ce qui concerne la topologie des circuits, on prévoit une implantation adaptée pour que la circulation logique des informations dans les différents anneaux et grappes corresponde à une longueur de conducteur minimale sur le microcircuit.

Par exemple, comme illustré figure 4, on regroupe les circuits des différentes grappes CL₁, CL₂, CL₃ dans des mêmes domaines respectifs, et on place ces domaines sur le circuit de manière que le domaine correspondant à une grappe donnée soit adjacent au domaine correspondant à la grappe immédiatement suivante, etc. afin de minimiser les longueurs physiques de conducteur compte tenu du sens de circulation des informations à l'intérieur d'une même grappe et d'une grappe à la suivante.

## Revendications

1. Un circuit électronique de microcalculateur, comportant sur une même puche :
- une unité centrale de traitement (CPU),
- une pluralité d'organes adressables (11, 21, 31), et
- une structure d'interconnexion pour l'échange de données entre lesdits organes adressables du microcalculateur, cette structure comprenant une artère d'interconnexion assurant le transfert parallèle sur un groupe de conducteurs des informations à échanger,
circuit **caractérisé en ce que** l'artère d'interconnexion est configurée en au moins un anneau (50 ; 60 ; 70) sur lequel les informations circulent en boucle fermée et de façon unidirectionnelle, cette artère comportant une pluralité de points de couplage aux organes du microcalculateur.

2. Le circuit de la revendication 1, dans lequel au moins certains des points de couplage comprennent une passerelle (G₁, G₂ ... G_{N}) vers, et depuis, un autre anneau d'ordre inférieur, anneau sur lequel les informations circulent également en boucle fermée et de façon unidirectionnelle, de manière à constituer une structure d'interconnexion comportant une pluralité d'anneaux hiérarchisés entre eux.

3. Le circuit de la revendication 2, comprenant sur l'anneau d'ordre le plus élevé (50) un point de couplage à une unité centrale de traitement (CPU).

4. Le circuit de la revendication 2, dans lequel la passerelle (G) comprend des moyens multiplexeurs (95, 96) pour transférer sélectivement en aval sur l'anneau d'ordre supérieur soit l'information reçue de l'anneau d'ordre inférieur, si le point de couplage correspondant à l'organe adressé se trouve sur cet anneau d'ordre inférieur ou sur un anneau d'ordre encore inférieur couplé à ce dernier, soit l'information reçue de l'anneau d'ordre supérieur en amont, dans le cas contraire.

5. Le circuit de la revendication 1, dans lequel au moins certains des points de couplage (10, 20, 30) comprennent un registre (11, 21, 31) associé à l'organe correspondant du microcalculateur.

6. Le circuit de la revendication 5, comprenant des moyens multiplexeurs (12, 22, 32) pour transférer sélectivement en aval sur l'anneau soit le contenu du registre, si le point de couplage correspond à l'organe adressé, soit l'information reçue de l'anneau en amont, dans le cas contraire.

7. Le circuit de la revendication 1, dans lequel l'un des points de couplage est un point de couplage (G_{IO}) à un bus d'échange de données bidirectionnel (80).

8. Le circuit des revendications 3 et 7 prises en combinaison, lequel dans le point de couplage (G_{IO}) au bus d'échange de données bidirectionnel est situé sur l'anneau d'ordre le plus élevé (50) et précède immédiatement l'unité centrale de traitement (CPU) sur cet anneau.

9. Le circuit de la revendication 1, dans lequel les conducteurs de l'artère d'interconnexion opèrent en logique à deux niveaux, essentiellement sans état à haute impédance

10. Le circuit de la revendication 2, dans lequel le circuit présente une topologie d'implantation dans laquelle les organes appartenant à un même anneau sont regroupés sur un domaine commun (CPU, CL₁, CL₂, CL₃), ce domaine étant adjacent au domaine correspondant à l'anneau de même rang immédiatement suivant, ou précédent, dans le sens de circulation de l'information.

11. Un dispositif médical implantable actif tel qu'un stimulateur ou défibrillateur cardiaque, comprenant un circuit électronique selon l'une des revendications précédentes.

## Claims

1. Electronic microprocessor circuit, comprising on one and the same chip:
- a central processing unit (CPU),
- a plurality of addressable modules (11, 21, 31),
and
- an interconnection structure for exchanging data between the said addressable modules of the microprocessor, this structure comprising an interconnection artery ensuring the parallel transfer on a group of conductors of the information to be exchanged,
circuit **characterized in that** the interconnection artery is configured as at least one ring (50; 60; 70) on which the information flows in a closed loop and in a unidirectional manner, this artery comprising a plurality of points of coupling to the modules of the microprocessor.

2. Circuit of Claim 1, in which at least some of the coupling points comprise a gateway (G₁, G₂... G_{N}) to, and from, another ring of lower order, on which ring the information likewise flows in a closed loop and in a unidirectional manner, so as to constitute an interconnection structure comprising a plurality of inter-hierarchized rings.

3. Circuit of Claim 2, comprising on the ring of highest order (50) a point of coupling to a central processing unit (CPU).

4. Circuit of Claim 2, in which the gateway (G) comprises multiplexer means (95, 96) for transferring selectively downstream on the ring of higher order either the item of information received from the ring of lower order, if the coupling point corresponding to the module addressed is situated on this ring of lower order or on a ring of still lower order coupled to the latter, or the item of information received from the ring of higher order upstream, in the converse case.

5. Circuit of Claim 1, in which at least some of the coupling points (10, 20, 30) comprise a register (11, 21, 31) associated with the corresponding module of the microprocessor.

6. Circuit of Claim 5, comprising multiplexer means (12, 22, 32) for transferring selectively downstream on the ring either the content of the register, if the coupling point corresponds to the addressed module, or the item of information received from the upstream ring, in the converse case.

7. Circuit of Claim 1, in which one of the coupling points is a point of coupling (G_{IO}) to a bidirectional data exchange bus (80).

8. Circuit of Claims 3 and 7 taken in combination, in which the point of coupling (G_{IO}) to the bidirectional data exchange bus is situated on the ring of highest order (50) and immediately precedes the central processing unit (CPU) on this ring.

9. Circuit of Claim 1, in which the conductors of the interconnection artery operate under two-level logic, essentially without a high-impedance state.

10. Circuit of Claim 2, in which the circuit exhibits an implantation topology in which the modules belonging to one and the same ring are grouped together on a common domain (CPU, CL₁, CL₂, CL₃), this domain being adjacent to the domain corresponding to the ring of like rank immediately hollowing, or preceding, in the direction of flow of the information.

11. Active implantable medical device such as a cardiac stimulator or defibrillator, comprising an electronic circuit according to one of the preceding claims.

## Patentansprüche

1. Elektronische Mikrorechnerschaltung, die auf dem gleichen Chip aufweist:
- eine zentrale Verarbeitungseinheit (CPU),
- mehrere ansteuerbare Organe (11, 21, 31) und
- eine Zwischenverbindungsstruktur für den Datenaustausch zwischen den ansteuerbaren Organen des Mikrorechners, wobei diese Struktur eine Zwischenverbindungsleitung enthält, die die parallele Übertragung der auszutauschenden Informationen auf einer Gruppe von Leitern gewährleistet,
wobei die Schaltung **dadurch gekennzeichnet ist, dass** die Zwischenverbindungsleitung als mindestens ein Ring (50; 60; 70) konfiguriert ist, auf dem die Informationen in geschlossener Schleife und unidirektional zirkulieren, wobei diese Leitung mehrere Kopplungspunkte mit den Organen des Mikrorechners aufweist.

2. Schaltung nach Anspruch 1, bei der mindestens bestimmte der Kopplungspunkte ein Gateway (G₁, G₂, ..., G_{N}) zu und von einem anderen Ring niedrigerer Ordnung enthalten, ein Ring, auf dem die Informationen ebenfalls in geschlossener Schleife und unidirektional zirkulieren, um eine Zwischenverbindungsstruktur zu formen, die mehrere untereinander hierarchisierte Ringe aufweist.

3. Schaltung nach Anspruch 2, die im Ring höchster Ordnung (50) einen Kopplungspunkt an eine zentrale Verarbeitungseinheit (CPU) enthält.

4. Schaltung nach Anspruch 2, bei der das Gateway (G) Multiplexeinrichtungen (95, 96) enthält, um selektiv hinten auf den Ring höherer Ordnung entweder die vom Ring niedrigerer Ordnung empfangene Information, wenn der dem angesteuerten Organ entsprechende Kopplungspunkt sich auf diesem Ring niedrigerer Ordnung oder auf einem Ring noch niedrigerer Ordnung befindet, der mit letzterem gekoppelt ist, oder im gegenteiligen Fall vorne die vom Ring höherer Ordnung empfangene Information zu übertragen.

5. Schaltung nach Anspruch 1, bei der mindestens bestimmte der Kopplungspunkte (10, 20, 30) ein Register (11, 21, 31) enthalten, das dem entsprechenden Organ des Mikrorechners zugeordnet ist.

6. Schaltung nach Anspruch 5, die Multiplexeinrichtungen (12, 22, 32) enthält, um selektiv hinten auf den Ring entweder den Inhalt des Registers, wenn der Kopplungspunkt dem angesteuerten Organ entspricht, oder im gegenteiligen Fall vorne die vom Ring empfangene Information zu übertragen.

7. Schaltung nach Anspruch 1, bei der einer der Kopplungspunkte ein Kopplungspunkt (G_{IO}) an einen bidirektionalen Datenaustauschbus (80) ist.

8. Schaltung nach den Ansprüchen 3 und 7 zusammen genommen, bei der der Kopplungspunkt (G_{IO}) an den bidirektionalen Datenaustauschpunkt sich auf dem Ring der höchsten Ordnung (50) befindet und direkt vor der zentralen Verarbeitungseinheit (CPU) auf diesem Ring liegt.

9. Schaltung nach Anspruch 1, bei der die Leiter der Zwischenverbindungsleitung als Logik mit zwei Ebenen arbeiten, hauptsächlich ohne Zustand hoher Impedanz.

10. Schaltung nach Anspruch 2, bei der die Schaltung eine Anordnungstopologie hat, bei der die zum gleichen Ring gehörenden Organe in einem gemeinsamen Bereich (CPU, CL₁, CL₂, CL₃) zusammengefasst sind, wobei dieser Bereich dem Bereich benachbart ist, der dem direkt folgenden oder vorhergehenden Ring gleichen Rangs in Richtung der Zirkulation der Information entspricht.

11. Aktive implantierbare medizinische Vorrichtung wie ein Herzschrittmacher oder Herzdefibrillator, die eine elektronische Schaltung nach einem der vorhergehenden Ansprüche enthält.
